# EUROPÄISCHE PATENTSCHRIFT

(11) **EP 3 224 502 B1**
(45) Veröffentlichungstag und Bekanntmachung des Hinweises auf die Patenterteilung: **12.09.2018**
(21) Anmeldenummer: 15763331.4
(22) Anmeldetag: 15.09.2015
(51) Int. Cl.: F16J 9/06

(54) **ZWEITEILIGER KOLBENRING**
TWO-PIECE PISTON RING
SEGMENT DE PISTON EN DEUX PARTIES

(30) Priorität: 25.11.2014 DE 102014223989
(43) Veröffentlichungstag der Anmeldung: 04.10.2017
(73) Patentinhaber: Federal-Mogul Burscheid GmbH, 51399 Burscheid (DE)
(72) Erfinder: PRÖPPER, Jörn, 51375 Leverkusen (DE); RUCH, Fabian, 51375 Leverkusen (DE)
(74) Vertreter: Becker Kurig Straus
(86) Internationale Anmeldenummer: PCT/EP2015/071006
(87) Internationale Veröffentlichungsnummer: WO 2016/082955

(56) Entgegenhaltungen:
- EP-A1- 2 778 481
- EP-A2- 1 020 667
- WO-A1-2013/180065
- DE-B1- 2 557 721
- FR-A- 1 280 297
- JP-A- S6 018 663
- US-A- 2 815 996
- US-A- 2 904 377
- US-A1- 2009 013 866
- US-A1- 2011 221 141

## Beschreibung

Die Erfindung betrifft einen verbesserten Kolbenring, insbesondere Kompressionsring, mit einem zweiteiligen Aufbau.

Eine der Aufgaben von Kolbenringen ist die Abdichtung der Brennkammer gegenüber dem Kurbelwellengehäuse. Solche Ringe werden daher auch als Kompressions- bzw. Top-Ringe bezeichnet. Die Gasmenge, die den obersten Ring passieren kann, bestimmt letztlich die Menge an Gas, die als so genanntes Blow-By durch den Motor nach außen gelangen kann. Es gilt hierbei, durch eine möglichst gute Abdichtung die Kompression des Motors so hoch wie möglich zu halten, um dessen Effizienz zu optimieren. Durch die Verringerung von Blow-By-Verlusten kann auch die davon verursachte Ölverdünnung minimiert werden. Grundsätzlich ist es erwünscht, Blow-By-Verluste soweit wie möglich zu vermeiden.

Dies ist allerdings nur durch eine möglichst gute Abdichtung zwischen Zylinderwand bzw. Laufbuchse und Kolben möglich. In der Praxis steht dem jedoch gegenüber, dass gleichzeitig eine möglichst geringe Reibung zwischen Kolbenringen und Zylinderinnenseite zu erzielen ist. Der Anpressdruck der Kolbenringe an die Zylinderlauffläche kann daher nicht unbegrenzt erhöht werden, da ansonsten die Reibung zu hoch würde. Der Kolbenring muss sowohl an der Ringflanke als auch an der Zylinderlauffläche dichtend wirken.

In der obersten Kolbenringnut werden überwiegend Rechteck- oder Trapezringe verwendet. Diese Ringe gewinnen ihren Anpressdruck an die Zylinderlauffläche aus der Vorspannung ihres Grundkörpers. Durch eine entsprechende Materialstärke, um diese Spannung zu gewährleisten, kann der Ring jedoch Unregelmäßigkeiten in der Zylinderlauffläche schlechter folgen.

Kolbenringe mit geringerer Materialstärke können zwar Unregelmäßigkeiten besser folgen, weisen aber auch eine geringere Spannung auf und neigen aufgrund der verringerten Dicken eher zu Ringbrüchen als dickere Ringe. Letzteres gilt insbesondere für Kompressionsringe mit im Wesentlichen U-förmigem Querschnitt, da hier relativ dünne Schenkel vorhanden sind, die einerseits an der Nutflanke anliegen und andererseits dem Verbrennungsdruck beim Arbeitstakt ausgesetzt sind. Diese Belastungen können ein Biegemoment entfalten, das zu einem Bruch führen kann.

Demzufolge ist es Aufgabe der vorliegenden Erfindung, einen zweiteiligen Kolbenring mit verringertem Ölverbrauch und zumindest gleicher Widerstandsfähigkeit gegenüber Belastungen bereitzustellen, die zum Ringbrechen führen können. Die Aufgabe besteht ferner auch darin, die Ölabstreifwirkung zu verbessern, bei höchstens gleichen oder sogar verringerten Reibverlusten. Es wird ein Kolbenring, insbesondere Kompressionsring, mit verbessertem Formfüllvermögen (höherer Elastizität in Radialrichtung) vorgeschlagen.

Gemäß einem Aspekt der Erfindung wird ein Kolbenring, insbesondere Kompressionsring, bereitgestellt, umfassend:
- einen an einer Stoßstelle offenen ringförmigen Grundkörper mit einem U-förmigem Querschnitt, dessen offene Seite in Radialrichtung nach innen weist;
- eine in der Axialrichtung mäanderförmig verlaufende Ringfeder, die den Grundkörper in Radialrichtung nach außen vorspannt;
wobei in einem Abschnitt der Ringfeder, der innerhalb des Grundkörper liegt, Mäanderschlaufen abwechselnd an den Schenkeln des U-förmigen Querschnitts anliegen; und
wobei in einem Abschnitt der Ringfeder, der aus dem Grundkörper herausragt, Mäanderschlaufen abwechselnd an den radial nach innen weisenden Kanten der Schenkel des U-förmigen Querschnitts anliegen.

Die Aufgabe wird unter anderem durch Entfernen von Material im Ringinneren gegenüber einem Vollmaterial-Ring erreicht. Da die Lauffläche und Flanken bzw. deren jeweilige Flächen weiterhin benötigt werden, führt dies zu einem U-förmigen Querschnitt. Durch das Verwenden eines U-förmigen Grundkörpers wird der Ring in radialer Richtung flexibler. Der U-förmige Querschnitt reduziert wiederum die notwendige Tangentialkraft und schwächt die obere stark druckbelastete Flanke. Durch die reduzierte Steifigkeit wird auch der Radialdruck, der aus der Ringgeometrie entsteht, bei gleichen Abmaßen reduziert. Diese Nachteile werden durch die vorgeschlagene Verwendung einer Feder kompensiert.

Bei gleicher Tangentialkraft und höherem Formfüllvermögen kann der erfindungsgemäße Kolbenring ausgeprägteren Zylinderverzügen besser folgen und eine höhere Dichtigkeit an der Lauffläche gewährleisten. Da die Wandstärke bzw. die anliegende Fläche an den beiden Ringflanken unverändert bleibt, ist die Abdichtung an den Flanken weiterhin gegeben. Ein vergleichbares Formfüllvermögen wäre mit konventionellen Vollmaterialringen nur durch enorme Tangentialkrafterhöhung möglich, was wiederum zu hohen Reibverlusten führen würde.

Durch den hohen Druck auf die Ringflanken und die Kontaktpunkte mit den Nutflanken an den äußeren Punkten des Kolbenring kann im Motorbetrieb ein Biegemoment entstehen, das durch bei dem vorgeschlagenen Ring durch eine mäanderförmige Feder abgefangen wird, deren Höhe im Inneren des U-förmigen Grundkörpers bzw. axial zwischen den Schenkeln davon ein Verbiegen der dünneren Schenkelabschnitte verhindert. Die mäanderförmige Feder stützt die Schenkel des U-förmigen Grundkörpers gegenüber Belastungen in Axialrichtung somit ab.

Insgesamt entsteht somit ein Kolbenring mit verringertem Ölverbrauch / verbesserter Ölabstreifwirkung bei höchstens gleichen oder sogar verringerten Reibverlusten bei gleichzeitig gegebener Stabilität gegenüber Ringbrechen.

Gemäß einer Ausführungsform weisen der Grundkörper und/oder das Innere des U-förmigen Querschnitts eine rechteckige Form auf. Dadurch sind bereits bekannte Herstellungsverfahren für den Kolbenring anwendbar. Alternativ können jedoch auch neue Verfahren wie Stanzen und Biegen zum Einsatz kommen.

Gemäß einer Ausführungsform weist die Ringfeder eine rechteckige, trapezförmige oder wellenförmige Mäanderform auf. Ein ähnlicher Kompressionskolbenring ist aus EP1020667A2 bekannt. Kurze Beschreibung der Figuren
Fig. 1 ist eine Querschnittsansicht eines konventionellen, einteiligen Kolbenrings mit U-Profil;
Fig. 2 ist eine Aufsicht einer Ausführungsform eines erfindungsgemäßen zweiteiligen Kolbenrings;
Fig. 3 ist eine Querschnittsansicht durch eine weitere Ausführungsform eines erfindungsgemäßen zweiteiligen Kolbenrings; und
Fig. 4 und 5 zeigen Mäanderprofile, die bei Ausführungsformen des erfindungsgemäßen Kolbenrings verwendet werden können.

### Detaillierte Beschreibung

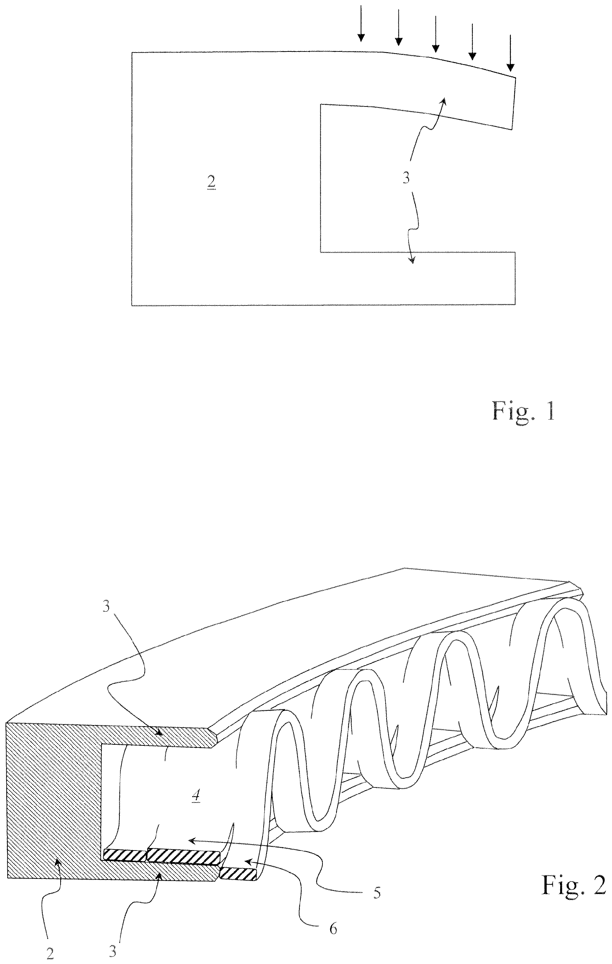

Figur 1 zeigt einen Querschnitt durch einen herkömmlichen einteiligen Kompressionskolbenring mit einem Grundkörper 2 mit U-förmigem Querschnitt. Während des Arbeitstakts des zugehörigen Motors liegt die untere Flanke 3 des Rings an der Ringnut (nicht gezeigt) an. Auf die obere Flanke 3 wirkt der Verbrennungsdruck beim Arbeitstakt des Motors, angedeutet durch Pfeile. Da die Flanke aufgrund des U-Profils eine wesentlich geringere Wandstärke aufweist als beispielsweise Rechteckringe, kann es zu einem Verbiegen der Flanke kommen, wie hier dargestellt.
Durch hohe Spitzenbelastung und/oder durch Ermüdung aufgrund andauernden Biegens im Betrieb kann es schließlich zum Brechen des Ringes kommen, etwa in der Gegend des Übergangs in die Schenkel des U-Profils.

Auch besitzt der gezeigte einteilige U-Profil-Kolbenring gegenüber einem Rechteckring mit ansonsten gleichen Abmessungen einen geringeren Radialdruck. Der Anpressdruck an die Zylinderlauffläche ist daher geringer.

Zur Lösung dieser Probleme schlägt die Erfindung daher einen zweiteiligen Kolbenring vor. Figur 2 zeigt eine Ausführungsform eines solchen Kolbenrings. Der Kolbenring 1 weist einen Grundkörper 2 mit U-förmigem Querschnitt auf. In der gezeigten Ausführungsform sind die radial nach innen weisenden Kanten der Schenkel des U-Querschnitts abgeschrägt. Alternativ sind ebenso rechteckige als auch gerundete Kanten oder Kombinationen davon möglich.

Im Inneren des U-Profils ist eine mäanderförmige Ringfeder 4 aufgenommen. In dem Abschnitt der Ringfeder 4, die innerhalb des Grundkörpers 2 aufgenommen ist, also sich zwischen den Schenkeln des U-Profils befindet, liegen die Mäanderschlaufen 5 abwechselnd an der oberen bzw. unteren Innenflanke des U-Profils an. In dem Abschnitt der Ringfeder 4, der aus dem Grundkörper 2 herausragt, liegen die Mäanderschlaufen 6 abwechselnd an den radial nach innen weisenden Kanten der Schenkel 3 des U-förmigen Querschnitts an.

Dadurch besitzt der zweiteilige Kolbenring zwei vorteilhafte Eigenschaften gegenüber einem einteiligen U-förmigen Ring. Einerseits wird der Radialdruck durch die Ringfeder 4 erhöht, die den Grundkörper 2 durch das Anliegen an den radialen Innenkanten der Schenkel nach außen drücken kann. Andererseits stützen die innen liegenden Abschnitte der Ringfeder 4 die Schenkel bzw. Flanken 3 gegenüber Druckbelastungen in axialer Richtung ab. Ein Ringbrechen kann so vermieden werden.

An den jeweiligen Maänderschlaufen befinden sich Schlitze, welche die inneren Maänderschlaufen 5 von den äußeren Mäanderschlaufen 6 trennen. Die Schlitze befinden sich beispielsweise im jeweiligen äußeren Drittel in Bezug auf die Höhe. Im mittleren Drittel hingegen ist die Ringfeder 4 einstückig. Andere Einteilungen sind ebenfalls möglich, solange ein ausreichend großer Bereich in der Mitte einstückig bleibt, um die Stabilität der Feder zu gewährleisten.

Ebenso ist es lediglich optional, wie dargestellt eine symmetrische Feder zu verwenden, die auch im inneren Bereich durch Schlitze abgetrennte Mäanderschlaufen aufweist. Dies kann aus Gründen einer vereinfachten Herstellung der Feder wünschenswert sein, auch wenn die inneren Schlaufen am Rand dann funktionslos sind.

Durch den relativ offenen Aufbau der Feder kann der Kolbenring auch bevorzugt als Kompressions- bzw. Top-Ring verwendet werden. Der Verbrennungsdruck kann an den offenen Stellen relativ ungehindert bis zur inneren Basisfläche des Grundkörpers vordringen und so den Kolbenring an die Zylinderlauffläche pressen. Dies ist ein Vorteil gegenüber massiveren Elementen zweiteiliger Kolbenringe, bei denen ein derartiger Gasdurchtritt nicht möglich ist.

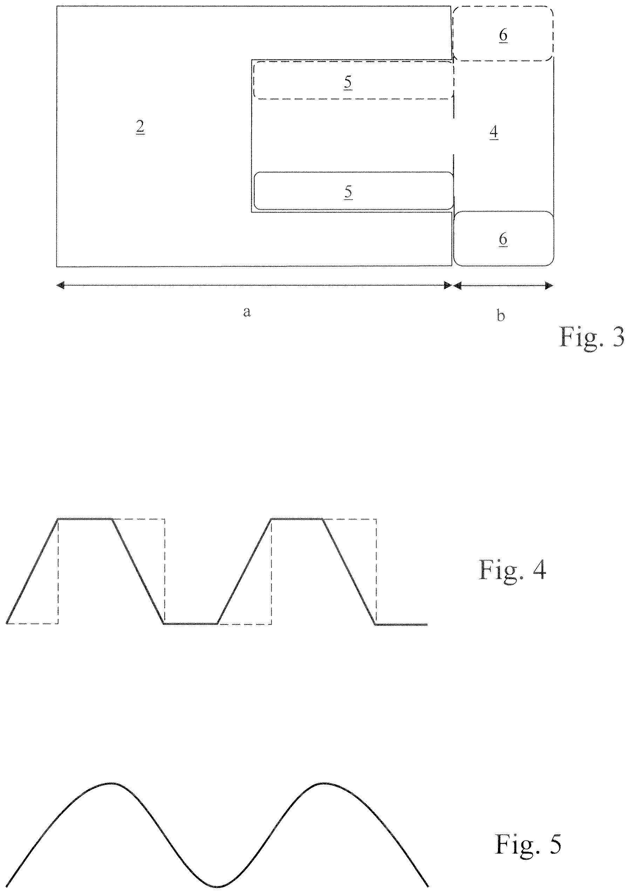

Figur 3 zeigt eine alternative Ausführungsform des Kolbenrings im Querschnitt. Hier wird eine unsymmetrische Ringfeder 4 verwendet, die ausschließlich einen (breiteren) Innenbereich mit Mäanderschlaufen 5 sowie einen (schmaleren) Außenbereich mit Mäanderschlaufen 6 aufweist. Bei dem gezeigten Querschnitt liegen die jeweils unteren Mäanderschlaufen an dem unteren Schenkel des U-Profils an. Gestrichelt gezeigt sind die in Umfangsrichtung dahinter liegenden Schlaufen, die dann an dem oberen Schenkel anliegen.

Die Figuren 4 und 5 zeigen Alternativen für die Mäanderform der Ringfeder. In Figur 4 sind (durchgezogen) trapezförmige Schlaufen sowie rechteckförmige Schlaufen (gestrichelt) gezeigt. In beiden Fällen gilt, dass hierdurch die bei wellenförmigen Maänderverläufen nur punkt- bzw. linienförmigen Anlagestellen an dem U-Profil durch flächigere Anlagen ersetzt werden. Das kann vorteilhaft sein, um die Kräfte gleichmäßiger verteilt einzuleiten. Außerdem kann durch steilere bis hin zu senkrechten Verläufen der Feder der Kolbenring in Axialrichtung besser gegen Biegemomente versteift werden.

Figur 5 zeigt einen wellenförmigen Mäanderverlauf. Auch dieser kann durch Anpassung der Steilheit und/oder Anzahl der Schlaufen hinsichtlich der Abstützwirkung eingestellt werden.

## Patentansprüche

1. Kompressionskolbenring (1), umfassend:
- einen vorzugsweise an einer Stoßstelle offenen ringförmigen Grundkörper (2) mit einem U-förmigem Querschnitt, dessen offene Seite in Radialrichtung nach innen weist;
- eine in der Axialrichtung mäanderförmig verlaufende Ringfeder (4), die den Grundkörper (2) in Radialrichtung nach außen vorspannt;
wobei in einem Abschnitt der Ringfeder (4), der innerhalb des Grundkörpers liegt, Mäanderschlaufen (5) abwechselnd an der oberen bzw. unteren Innenflanke der Schenkel (3) des U-förmigen Querschnitts anliegen, so dass die Schenkel (3) in axialer Richtung gegenüber Druckbelastungen abgestützt sind;
wobei in einem Abschnitt der Ringfeder (4), der aus dem Grundkörper (2) herausragt, äußere Mäanderschlaufen (6) abwechselnd an den radial nach innen weisenden Kanten der Schenkel (3) des U-förmigen Querschnitts anliegen.

2. Kolbenring (1) nach Anspruch 1, wobei der Grundkörper (2) und/oder das Innere des U-förmigen Querschnitts eine rechteckige Form aufweisen.

3. Kolbenring (1) nach einem der vorhergehenden Ansprüche, wobei die Ringfeder (4) eine rechteckige, trapezförmige oder wellenförmige Mäanderform aufweist.

## Claims

1. A compression piston ring (1), comprising:
- an annular base body (2), which is preferably open at a joint, with a U-shaped cross section, the open side of which faces inwards in the radial direction;
- a ring spring (4) running in a meandering manner in the axial direction, which pretensions the base body (2) outwards in the radial direction;
wherein in a section of the ring spring (4), which is located inside the base body, meandering loops (5) bear alternately against the upper or lower inner flank of the shanks (3) of the U-shaped cross section, so that the shanks (3) are supported in the axial direction with respect to pressure loads;
wherein in a section of the ring spring (4), which protrudes out of the base body (2), outer meandering loops (6) bear alternately against the radially inwardly facing edges of the shanks (3) of the U-shaped cross section.

2. The piston ring (1) according to Claim 1, wherein the base body (2) and/or the interior of the U-shaped cross section have a rectangular shape.

3. The piston ring (1) according to one of the preceding claims, wherein the ring spring (4) has a rectangular, trapezoidal or wave-shaped meandering shape.

## Revendications

1. Segment de piston de compression (1), comprenant :
- un corps de base (2) annulaire ouvert de préférence sur une zone d'aboutement, avec une section transversale en forme de U, dont le côté ouvert est tourné vers l'intérieur dans la direction radiale,
- un ressort annulaire (4) s'étendant en forme de méandre dans la direction axiale, qui précontraint le corps de base (2) dans la direction radiale vers l'extérieur ;
dans lequel dans une section du ressort annulaire (4), qui est située à l'intérieur du corps de base, des boucles en méandres (5) sont situées en alternance sur le flanc intérieur supérieur, respectivement inférieur des pans (3) de la section transversale en forme de U, de sorte que les pans (3) soient appuyés dans la direction axiale en sens opposé aux charges de pression ;
dans lequel dans une section du ressort annulaire (4), qui dépasse en saillie du corps de base (2), des boucles en méandres extérieures (6) sont situées en alternance sur les arêtes tournées radialement vers l'intérieur des pans (3) de la section transversale en forme de U.

2. Segment de piston (1) selon la revendication 1, dans lequel le corps de base (2) et/ou l'intérieur de la section transversale en forme de U présentent une forme rectangulaire.

3. Segment de piston (1) selon une des revendications précédentes, dans lequel le ressort annulaire (4) présente une forme de méandre rectangulaire, trapézoïdale ou ondulée.
